# EUROPEAN PATENT APPLICATION

(11) **EP 1 533 930 A1**
(43) Date of publication of application: **25.05.2005**
(21) Application number: 03026852.8
(22) Date of filing: 21.11.2003
(51) Int. Cl.: H04L 1/00, H04L 29/06

(54) **Additional error protection for MPE section headers and TS packet headers**

(71) Applicant: MATSUSHITA ELECTRIC INDUSTRIAL CO., LTD., Kadoma-shi, Osaka 571-8501 (JP)
(72) Inventor: Scheid, Albrecht, 63225 Langen (DE); Kursawe, Thomas, 63179 Obertshausen (DE)
(74) Representative: Grünecker, Kinkeldey, Stockmair & Schwanhäusser Anwaltssozietät

(57) **Abstract**

The present invention enables an improved protection of transmission data for wireless transmissions in error prone environments. For this purpose, the transmission packet header and a header portion of another packet layer structure inserted into a transmission packet are subjected to additional error protection. Based on the additional error protection, an improved error resistance can be achieved and a data loss of a plurality of transport packets based on a single corrupted packet can be prevented.

## Description

The present invention relates to an improved protection for packet based transmission. In particular the present invention relates to a method and apparatus for transmitting and receiving DVB-H services with improved protection against transmission errors.

For the transmission of digital video data, different transmission systems for the different available transmission paths have been standardised. While a satellite broadcast of video data has been standardised in the DVB-S standard and a cable transmission in the DVB-C standard, a terrestrial broadcast of video data has been standardised in the DVB-T standard. The terrestrial broadcasting transmission system DVB-T is intended for broadcast systems targeting receivers at home, offices, cars, etc. The DVB-T system is also suited for reception by mobile receivers.

A new DVB transmission standard DVB-H is currently under development and intended for small, pocketable terminals which are battery operated. These terminals could be small hand-held devices such as mobile phones and provide reception inside buildings and cars.

Current DVB-H transmission schemes combine one or more elementary streams of video and audio as well as other data into a single or into multiple streams which are suitable for storage or transmission. Single video and/or audio streams are compressed and packetised to produce PES packets. The PES packets are further combined with system level information to form a transport stream (TS).

A transport stream combines one or more programs with one or more independent time bases into a single stream. PES packets are made of elementary streams that form a program sharing a common time base. The transport stream is designed for user environments where errors are likely, such as storage or transmission in lossy or noisy environments. Transport stream packets are 188 bytes in length. The transport stream in defined is ISO/IEC 13818-1.

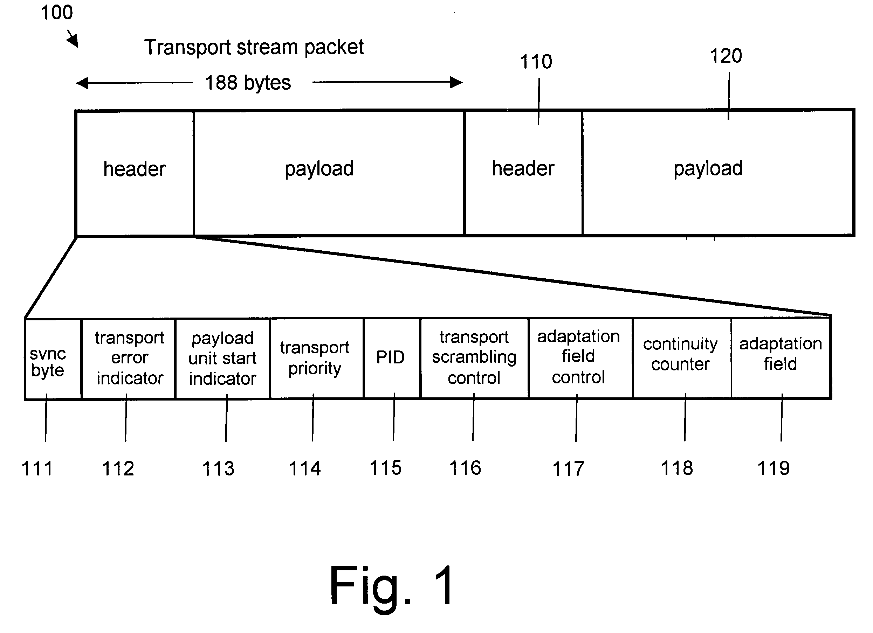

The general configuration of a TS packet 100 is generally illustrated in Fig. 1. The TS packet 100 contains a TS packet header portion 110 followed by TS packet payload portion 120. While the TS packet header portion has a length of 4 bytes, the payload portion 120 has length of 184 bytes.

The packet header portion 110 consists of a sync byte 111, a transport error indicator 220, a payload unit start indicator 113, a transport priority 114, a PID 115, a transport scrambling control 116, an adaptation field control 117, a continuity counter 118 and adaptation field 119. An overview of the bits provided for each of the header portion fields is shown below in Table 1.

**Table 1**

| Syntax | No. of bits |
|---|---|
| sync_byte | 8 |
| transport_error_indicator | 1 |
| payload_unit_start_indicator | 1 |
| transport_priority | 1 |
| PID | 13 |
| transport_scrambling_control | 2 |
| adaptation_field_control | 2 |
| continuity_counter | 4 |

The sync byte is a fixed 8-bit field.

The transport error indicator is 1 bit flag. When set to "1", it indicates that at least one uncorrectable bit error exists in the associated transport stream packet. This bit may be set to "1" for entities external to the transport layer. When set to "1", this bit is not reset to "0" unless the bit values in error have been corrected.

The payload unit start indicator is a 1 bit flag which has normative meaning for transport stream packets that carry PES packets or PSI data. The payload of the transport stream packet contains PES packet data, a "1" of the payload unit start indicator indicates that the payload of this TS packet will commence with the first byte of the PES packet and a "0" indicates no PES packet shall start in this TS packet.

The transport priority is a 1 bit indicator which, when set to "1" , indicates that the associated packet is of greater priority than other packets having the same PID which do not have the bit set to "1". This mechanism prioritises data within an elementary stream. The PID is a 13 bit field which indicates the type of data stored in the packet payload. Particular PID values are reserved for the program association table, the conditional access table and the transport stream description table.

The transport scrambling control is a 2 bit field indicating the scrambling mode of the TS packet payload.

The adaptation field control is a 2 bit field indicating whether the TS packet header is followed by an adaptation field and/or payload.

The continuity counter is a 4 bit field incrementing with each TS packet having the same PID. The continuity counter wraps around to 0 after having reached its maximum value. When sending duplicate packets in transport streams as consecutive TS packets of the same PID, the duplicate packet has the same continuity counter values as the original packet.

For further details of the individual TS packet header portion 110, reference is made to ISO/IEC 13818-1.

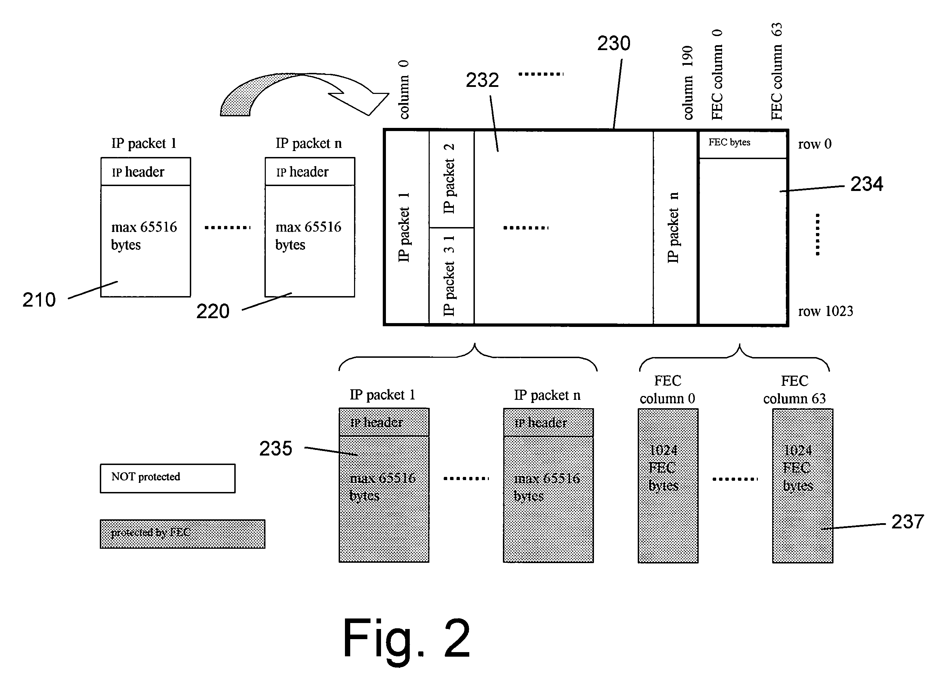

The forthcoming DVB-H specification, similar to the DVB-T standard uses the above described TS packet syntax and semantics as defined "digital video broadcasting (DVB)", ETSI EN 300 744 V1.4.1. In addition to DVB-T, DVB-H provides an additional forward error protection applied to data of the 184 byte long payload portion. This forward error protection is applied to part of the payload portion only, namely the encapsulated IP datagrams, but neither to the data of the TS packet header portion nor to the payload portion, which contains the section header and the optional CRC-32 parity data. The additionally applied error protection scheme is described in connection with Fig.2.

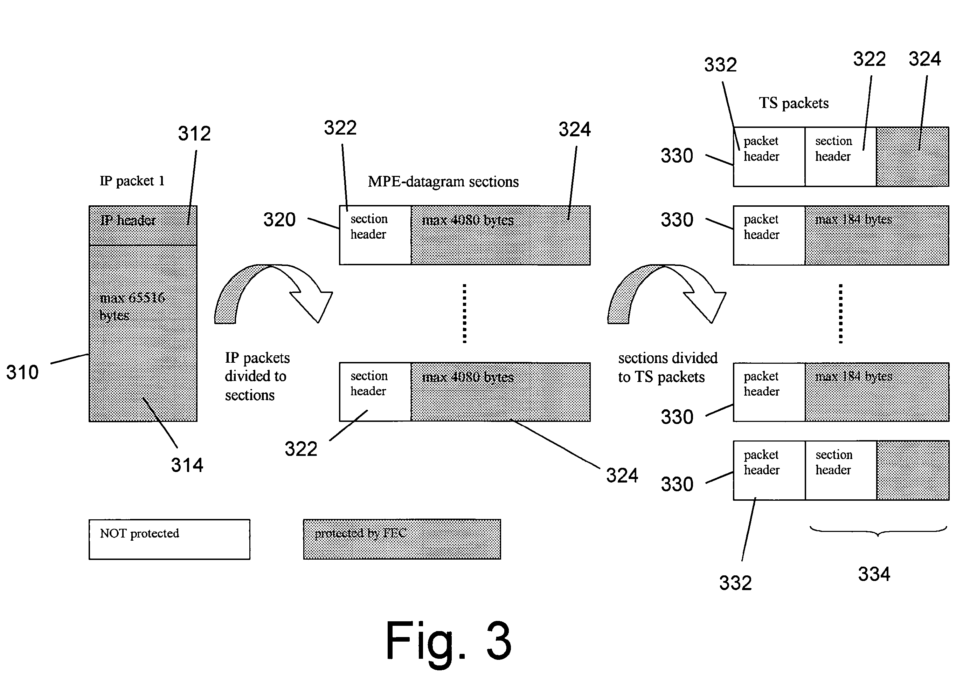

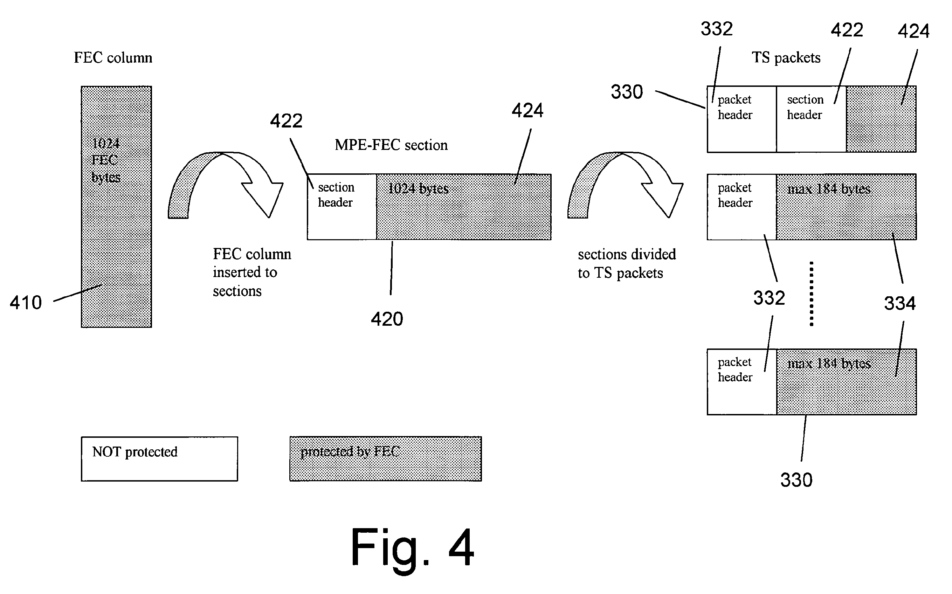

The DVB-H service data to be transmitted is received in form of IP packets 210, 220. In order to calculate additional error protection data, the IP-packets 210, 220 are written into an "application data table" 232. Each of the received IP packets 210, 220 has a maximum length of 64k bytes including a 20 byte IP header. The application data table consists of a predefined number of columns, preferably 191, each of which having a data capacity of 1024 bytes. FEC bytes as error protection data are calculated based on the data of the IP packet 210, 220 of the application data table 232. The IP packet data of the application data table 232 are subjected to a Reed Solomon encoder for the calculation of error protection data, i.e. FEC bytes. The FEC bytes are attached as additional FEC columns 234 to the application data table. The application data table and the additionally calculated error protection data 237 form the multi-protocol-encapsulation MPE FEC frame 230. After calculation of the error protection data 237, the IP packets 235 are read out of the MPE-FEC frame and fed to an encapsulator in order to encapsulate the IP packets into MPE-datagram sections. The encapsulation procedure is illustrated in connection with Fig. 3 and 4.

The encapsulation of IP packets 310 from the MPE-FEC frame 230 is illustrated in Fig. 3. Each IP packet 310 comprises an IP header portion 312 and an IP payload portion 314. The IP payload portion has a maximum capacity of 65516 bytes. The data of each IP packet are cut into smaller portions of a maximum length of 4080 bytes. The divided IP data portions are inserted into the payload portion 324 of MPE-datagram sections 320. In this manner, all IP data are encapsulated in MPE-datagram sections 320. Each MPE-datagram section 320 further comprises a section header 322. Section header 322 has a length of 12 bytes. CRC-32 parity data at the end of each MPE-datagram section are optional.

After encapsulating the IP data in MPE-datagram sections 320, the section data are inserted into the TS packets 330. Each TS packet has a total length of 188 bytes, including 4 header bytes, optional adaptation field bytes and up to 184 bytes of payload capacity. The MPE-datagram sections 320 are divided into smaller parts in order to fit into the TS packet payload portions 334. As shown in Fig. 3, each TS packet 320 comprises its individual packet header 332 and a part of a MPE-datagram section, namely IP data 324 and in frequent intervals, a MPE-section header 322.

The encapsulation of error protection data 234 is illustrated in connection with Fig. 4. Each column 410 of FEC data having MPE-FEC frame structure 230 is also encapsulated in accordance with the multi-protocol-encapsulation (MPE). Each column 410 of FEC data is also encapsulated into MPE-FEC sections 420, each of which including section header 422 and a payload portion 424. The payload portion 224 has a maximum capacity of 1024 bytes, filling exactly one column of a MPE-FEC frame with max. 1024 rows. In accordance with the division of datagram sections for the IP packet data, the error protection data of the MPE-FEC sections 420 are divided and inserted into TS packets 320. The payload portion of each TS packet 320 receives the divided MPE-FEC section data.

Further details of the encapsulation procedure which has been roughly described in connection with fig. 3 and fig. 4 are disclosed in the MPEG specification ISO/IEC 13818-1 "generic coding of moving pictures and associated audio: systems", and a draft ETSI EN 301 192 V1.4.1 "digital video broadcasting (DVB); DVB specification for data broadcasting".

The TS packets 330 including the encapsulated IP packet data and error protection data are broadcast through the DVB-H network.

According to the above described forward error correction, the error protection is calculated on the IP packet level as illustrated in Fig. 2. The calculated error protection data provides an error correction ability on the receiving side for both, the IP data and the calculated FEC. The TS packet headers 332 and the MPE section headers 322, 422 do not comprise any additional error protection against transmission errors. The applied error correction ability is indicated in figures 2 to 3 by a grey background colour for the respective kinds of data.

Due to the mobile receiver characteristics, the DVB-H transmission is error prone. Consequently, the unprotected TS packet header portion 332 and the section header 322, 422 are likely to contain transmission errors. The DVB-H FEC chain is only able to correct a certain amount of transmission errors occurred within each received TS packet 330. In case there are more than 8 byte errors within each received TS packet, the errors cannot be corrected and the complete packet has to be discarded.

It may happen that a TS packet 330 which carries a MPE-section header 322, 422 comprises an uncorrectable amount of transmission errors. As the section header cannot be reconstructed, the complete payload portion of that section which is distributed over a plurality of TS packets, has to be discarded. This is due to the essential parameters included into the section header which indicate the usage of the following section payload portion 324, 424. The section header 322, 422 includes parameters like length of the section, section payload position inside the MPE-FEC frame 230, etc. Only these parameters enable to reconstruct IP packets based on a plurality of sections, i.e. to conduct a reverse processing to the above described encapsulation procedure.

In accordance with the described transmission scheme only applying improved error protection to the IP packet data, the TS packet headers 332 and the section headers 322, 422 are subject to transmission errors. A single TS packet 330 which has to be discarded may result in a data loss of a plurality of TS packets in case the lost TS packet includes section header data 322, 422. Consequently, a sequence of a maximum amount of 4096 bytes may be lost due to a single received corrupted and uncorrectable TS packet of 188 bytes.

Consequently, it is the object of the present invention to provide an improved transmission scheme for TS packets in error prone environments.

This is achieved by the features of the independent claims.

According to a first aspect of the present invention, a method for transmitting data in a stream of packets is provided. Each packet comprises a header portion and a payload portion. The method calculates error protection data for the data to be transmitted. The data to be transmitted together with the calculated error protection is divided into a plurality of sections. Each of the sections comprises a section header. The sections are divided into a plurality of portions which are inserted into the payload portion of said packets. The resulting stream of packets is transmitted. Additionally, error protection data are calculated for said section header and the packet header portion of a packet including said section header. The additionally calculated error protection data is inserted into the respective packet.

According to another aspect of the present invention, a transmitter for transmitting data in a stream of packets is provided. Each packet comprises a header portion and a payload portion. The transmitter comprises an encoder for calculating error protection data for said data to be transmitted. An encapsulator of a transmitter divides the plurality of data to be transmitted and the calculated error protection data into a plurality of sections. Each of said sections comprises a section header. A packetiser divides each of the sections into a plurality of portions. Each of the portions is inserted into a payload portion of one of the packets. The transmitter further comprises a header FEC unit for calculating error protection data for the section header and the packet header portion of the packet including the section header. The calculated error protection data is inserted into the packet.

According to a further aspect, a method for receiving data in form of a stream of packets is provided. Each packet comprises a header portion and a payload portion. From the received stream of packets, data which include the payload portion are extracted. From the extracted payload portion data of a plurality of subsequently received packets, sections are formed. Each section includes a section header extracted from the payload portion. An error correction calculation is applied to a plurality of sections. The error correction calculation is based on error protection data transmitted in individual sections thereof. The error corrected data is output. The method further extracts additional error protection data from a received packet containing a section header. An error correction calculation is applied to the section header and the respective packet header based on the extracted error correction data.

According to a further aspect of the present invention, a receiver for receiving data in form of a stream of packages is provided. Each packet comprises a header portion and a payload portion. The receiver comprises a section generator for extracting the data included in the payload portion of each of received package and for forming sections from the extracted payload portion data of a plurality of subsequently received packets. Each of said sections include a section header. An error correction unit provided in the receiver applies an error correction calculation to a plurality of sections based on error protection data transmitted in individual sections thereof. The receiver further comprises a header correction unit for extracting additional error protection data from the packet which includes a section header. The header error correction unit further applies an error correction calculation to the section header and to the respective packet header based on the extracted error correction data.

It is the particular approach of the present invention to provide additional error protection for section headers of encapsulated transmission data included within the packet payload portions and for the respective packet headers in a packetised transmission scheme. The additional error protection ensures that a packet containing a section header can reliably be reconstructed. The increased resilience against the transmission error enables a reliable reception in error prone environments.

It is the particular advantage of the present invention that by selectively subjecting only the small number of packets to an additional error protection, a loss of a larger number of packets can be prevented due to a single corrupted packet. By protecting a section header and the corresponding packet header, a data loss of the section header information and a corresponding loss of the complete section can be prevented with a small additional computation effort.

According to a preferred embodiment, the additionally calculated error protection data for the packet header and the section header are inserted into an optional field following a fixed header data structure of each packet header. Accordingly, existing transmission schemes are not affected and the error protection data can be included into the existing structure in a simple manner. According to a preferred embodiment, the optional field is the adaptation field within a TS packet.

Preferably, the additional error protection data are inserted into the private field or a stuffing bytes field of the adaptation field. While the private data field uses a direct length parameter, the insertion into the stuffing bytes field does not require a direct length parameter.

Preferably, the additional error protection is calculated based on a Reed Solomon encoding scheme. Most preferably, a shortened and punctured RS(255,191) encoder is used therefore.

The calculation of additional error protection data preferably calculates a maximum of 16 bytes of additional error protection data. These 16 error protection bytes enable a correction of 8 erroneous bytes within the packet header 332 and section headers 322, 422 included within a single packet 330.

Preferably, the method is performed in a mobile receiver, thus enabling mobile reception even under error prone reception conditions, in particular, during signal fading.

Preferably, the data is transmitted in accordance with the DVB-H specification. According to preferred embodiments, the received data, preferably in form of IP packets, are subjected to an encapsulation process. The received data is written into a data frame having a predefined maximum number of columns of a specified capacity.

Preferably, the encapsulation corresponds to the multi-protocol encapsulation as defined in the MPEG specification and the DVB specification for data broadcasting. As the outer coder as specified in DVB-T provides error protection for the data to be transmitted, the present invention further protects the header data of the encapsulated data portions, thus applying error protection to all kinds of sensitive data for use in error prone environments.

Preferably, each DVB-H service has a unique packet identifier included into each transmitted packet. The unique packet identifier identifies the individual DVB-H service. The unique identifier prevents any impact on other services using the adaptation field for their purpose.

Other embodiments and advantages of the present invention will become apparent from the following description of preferred embodiments, in which:
- Fig. 1: schematically illustrates a configuration of a transport stream data packet and details of data included in a transport stream packet header;
- Fig. 2: illustrates a MPE-FEC frame structure for calculating error protection based on the IP packets to be transmitted;
- Fig. 3: schematically illustrates the multi-protocol-encapsulation of IP packets into MPE-datagram sections;
- Fig. 4: schematically illustrates the multi-protocol-encapsulation of error protection data into MPE-FEC sections;
- Fig. 5: illustrates the configuration of the adaptation field within the transport stream packet header; and
- Fig. 6: illustrate in block diagram form, the transmission procedure according to the present invention.

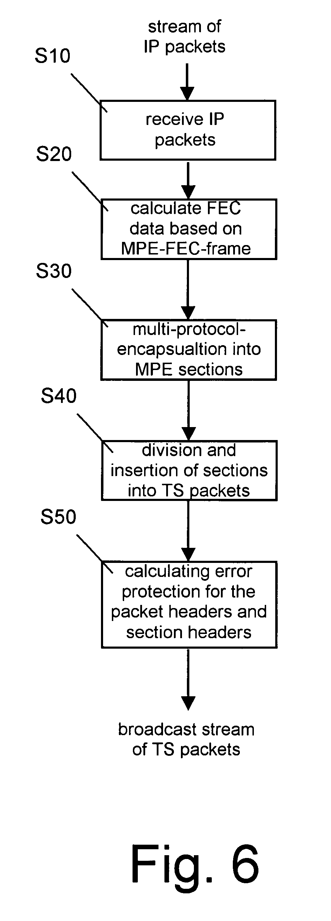

The operations performed for transmitting data in accordance with the present invention is illustrated in block diagram form in Fig. 6. A stream of IP packets 210, 220 is received in step S10. The IP packets are inserted into an application data table in form of columns as illustrated in Fig. 2. Each column comprises a maximum of 1024 bytes of data.

The data arranged within said multi-protocol-encapsulation (MPE) frame are subjected on a row basis to a Reed Solomon encoder for calculating error protection data (step S20). The error protection data 234 is attached to the MPE-FEC frame structure 230.

The data included in the MPE-FEC-frame structure 230 are encapsulated into MPE datagram sections 320 and MPE-FEC sections 420 (step S30). This is accomplished by dividing the 64k bytes of each IP packet 310 into smaller portions which fit into the payload portion 324 of the MPE-datagram sections 320. Each MPE-datagram-section 320 have a maximum payload portion capacity of 4080 bytes and a header of 12 bytes and optionally four CRC-32 parity bytes.

As shown in Fig. 4, the error protection data 410 are inserted into MPE-FEC sections 420. Preferably, the data capacity of payload portion 424 of MPE-FEC section 420 is 1024 bytes, thus equaling the number of bytes included into each FEC column 410.

As indicated on the right hand side of Figures 3 and 4, the generated MPE datagram/FEC sections 320, 420 are inserted into TS packets 330. As the payload portion 334 of each TS packet 330 only has maximum data capacity of 184 bytes, the payload portion and header data 322, 324, 422, 424 of each section are further divided and inserted into the TS packet payload portions 334 respectively (step S40).

In order to improve the error resistance of the transmission scheme, error protection data is calculated for the 12 bytes of each section header 322, 422 (step S50) and for the 4 header bytes of each TS packet 330 containing a section header 322, 422.For the error protection for MPE section headers 322, 422 and TS packet headers 332, a predetermined amount of additional FEC bytes is calculated and inserted into the TS packet 330. For this purpose, an adaptation field preferably inserted into those TS packets 330 carrying a MPE section header 322, 422 within its payload portion 334. Due to the variable length of the adaptation field 119, a variable amount of FEC bytes for additional error protection can be employed. Preferably, 16 additional FEC bytes for protecting the TS packet header 332 and the MPE section header 322, 422 included in the payload portion of the TS packet 330 are calculated.

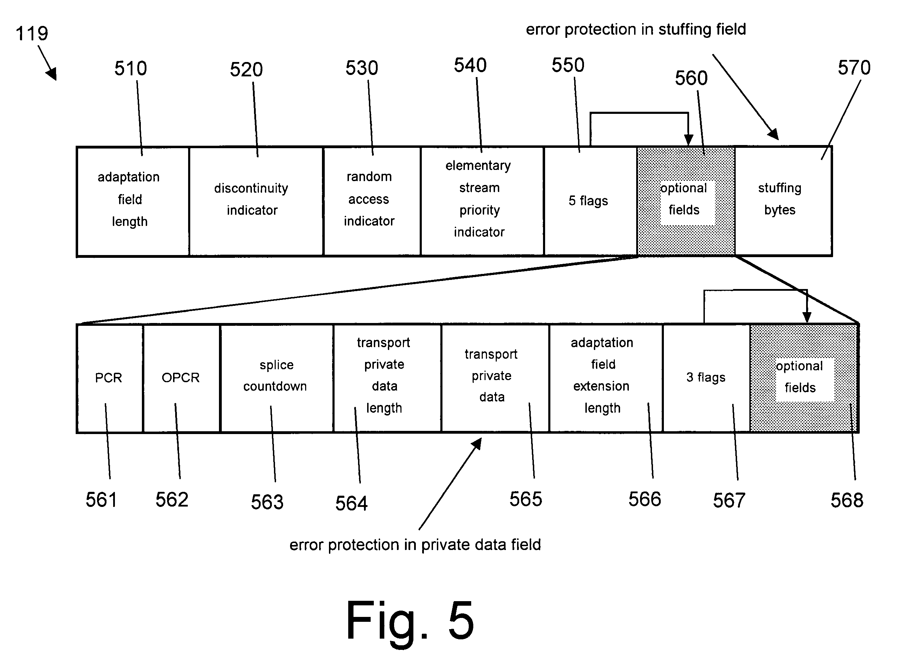

The MPE unit or a software performing the MPE processing is dividing the IP packet 310 into MPE-datagram-sections 320 which will be transmitted in portions in TS packets 330. The MPE unit recognises whether or not a TS packet 330 includes a MPE section header 322. In case the TS packet 330 includes a section header 322, 16 place holder bytes are inserted into the private data field 565 within the internal structure of the adaptation field 119. The structure of the adaptation field is shown in detail in Fig. 5.

The adaptation field 119 comprises a field 510 indicating the adaptation field length, a continuity indicator 520, a random access indicator 530, an elementary stream priority indicator 540, 5 flags 550 for the optional field 560 and a stuffing bytes field 570. The optional field 560 may contain the following fields: a PCR field 561, an OPCR field 562, a splice countdown field 563, a transport private data length field 564, a transport private data field 565, an adaptation field extension length field 566, 3 flags 567 for additional optional fields 568. While the adaptation field length 510 has length of 8 bits, fields 520 to 540, each have a length of 1 bit. The field 550 has length of 5 bits. Regarding the sub fields of field 560, fields 561, 562 each have a length of 42 bits. Sub fields 563, 564 and 566 each have a length of 8 bits. The flags in field 567 have a total length of 3 bits.

Private data field 565 is as can be seen from Fig. 5, a sub field of the adaptation field 119.

For the FEC bytes calculation, the 4 header bytes of the TS packet 330 and the 12 byte of the MPE section header 322, 422 contained in the TS packets payload portion 334 are supplied to a Reed Solomon (RS) encoder Preferably, the encoder is a shortened and punctured RS(255,191) encoder. The 16 FEC bytes resulting from the error protection calculation are inserted at the place holder byte positions.

At the receiving side, the additionally inserted error protection data is extracted and employed for correcting the 4 header bytes of the TS packet 330 and the 12 bytes of the MPE section header 322, 422 included within the TS packet 330. Based on the 16 FEC bytes extracted from the adaptation field 119, 8 byte errors within the TS header 332 and within the first 12 bytes of the TS packet payload 334 can be corrected. These 12 first bytes of the TS packet payload portion 334 represent the MPE section header 322.

The receiving side subjects all corrupted TS packets 330 which possibly include a section header 322, 422 to the error correction processing. These packets are preferably identified based on the expected receiving times of a TS packet 330. A TS packet 330 including a section header 322, 422 is expected based on an estimated arrival time thereof. The arrival time is estimated based on the receiver's local time base, the length of the prior section 320 and the data rate.

The additional error protection data inserted into the adaptation field may be inserted into the fixed transmission scheme TS packets in accordance with the following two options. First, the additional error protection data is stored in the optional private data field 565. The insertion of error protection data into this field allows a direct indication of the field length. According to a second option, the additional error protection bytes are stored in the stuffing bytes field 570 of the adaptation field 119. This optional field does not include any particular length parameter. Thus, the length of this field has to be determined by evaluating the adaptation field length and the optional field length.

In accordance with the preferred embodiment, the additionally calculated error protection information is inserted into the adaptation field of a TS packet in accordance with ISO/IEC 13818-1:2000(E) "Generic coding of moving pictures and associated audio: systems". However, the present invention is not limited to this insertion scheme. As a skilled person is aware, the additional error protection data can be inserted at any appropriate position within the respective field, i.e. in the header portion, in the payload portion or into another portion which may, for instance, be especially provided for this purpose.

Summarising, the present invention enables an improved protection of transmission data for wireless transmissions in error prone environments. For this purpose, the transmission packet header and a header portion of another packet layer structure inserted into a transmission packet are subjected to additional error protection. Based on the additional error protection, an improved error resistance can be achieved and a data loss of a plurality of transport packets based on a single corrupted packet can be prevented.

## Claims

1. A method for transmitting data in a stream of packets (330), each packet (330) comprising a header portion (332) and a payload portion (334), the method comprising the steps of:
calculating (S20) error protection data for said data to be transmitted,
dividing (S30) said data to be transmitted and said calculated error protection data (410) into a plurality of sections (320, 420), each of said sections (320, 420) having a section header (322, 422),
dividing (S40) each of said sections (320, 420) into a plurality of portions and inserting each of said portions into the payload portion (334) of one of said packets (330), and
transmitting said stream of packets
**characterized by**
additionally calculating (S50) error protection data for said section header (322, 422) and the packet header portion (332) of the packet (330) including said section header (322, 422), and
attaching the additionally calculated error protection data to the respective packets (330).

2. A method according to claim 1, wherein said additionally calculated error protection data is inserted into an optional field (119) of said packet (330) having a fixed data structure.

3. A method according to claim 1 or 2, wherein said optional field (119) being the adaptation field of a transport stream packet (330).

4. A method according to claim 3, wherein said additionally calculated error protection data being inserted into a private data field (565) or a stuffing bytes field (570) of said adaptation field (119).

5. A method according to any of claims 1 to 4, wherein said calculation of additional error protection data applies a Reed Solomon encoding scheme.

6. A method according to claim 5, wherein the applied Reed Solomon encoding scheme uses a shortened and punctured Reed Solomon code.

7. A method according to claim 5 or 6, wherein said applied Reed Solomon encoding scheme being a shortened and punctured RS(255,191) encoder.

8. A method according to any of claims 3 to 7, wherein said calculation of additional error protection data being applied to the 4 header bytes of said packet being a transport stream packet and the 12 header bytes of said section.

9. A method according to any of claims 1 to 8, wherein said calculation of additional error protection data calculates a maximum of 16 bytes of additional error protection data.

10. A method according to any of claims 1 to 9, wherein said data are transmitted to a mobile receiver.

11. A method according to any of claims 1 to 10, wherein said transmission being in accordance with the DVB-H specification.

12. A method according to any of claims 1 to 11, wherein said data to be transmitted are received in form of IP packets (210, 220).

13. A method according to claim 12, wherein a predefined number of said received IP packets (210, 220) being written into a data frame (230).

14. A method according to claim 13, wherein said data frame (230) comprising a predefined maximum number of columns, each column having a maximum capacity of 1024 bytes.

15. A method according to claim 13 or 14, wherein said data frame (230) being a multi protocol encapsulation frame in accordance with the DVB-Data Broadcast Specification EN 301 192.

16. A method according to any of claims 1 to 15, wherein each of said data sections (320, 420) having a maximum data capacity of 4080 bytes.

17. A method according to any of claims 1 to 16, wherein each of said packets (330) having a maximum data capacity of 184 bytes.

18. A method according to any of claims 1 to 17, wherein the calculation step (S20) of error protection data calculating error protection data for the IP packets (235) written into said data frame (230).

19. A method according to claim 18, wherein said calculation of error protection data calculating a predefined maximum number of additional columns.

20. A method according to any of claims 13 to 19, wherein the data of said data frame (230) and said calculated error protection data (234) are read out and divided into said data sections (420).

21. A method according to any of claims 1 to 20, wherein said data sections (320, 420) being multi protocol encapsulation data sections in accordance with the DVB-Data Broadcast Specification EN 301 192.

22. A method according to any of claims 11 to 21, wherein said transport stream broadcasting a DVB-H service and each transport stream packet (330) of a particular DVB-H service comprising a unique packet identifier (115) identifying said DVB-H service.

23. A method for receiving data in form of a stream of packets (330), each packet (330) comprising a header portion (332) and a payload portion (334), the method comprising the steps of:
receiving said stream of packets (330),
extracting the data included in the payload portion (334) of each received packet (330) and forming sections (320, 420) from the extracted payload portion data (322, 324, 422, 424) of a plurality of subsequently received packets (330), each of said sections (320, 420) including a section header (322, 422),
applying an error correction calculation to a plurality of sections (320, 420) based on error protection data transmitted in individual sections (420) thereof,
outputting the error corrected data
**characterized by**
extracting additional error protection data from a packet (330) containing a section header (322, 422), and
applying an error correction calculation to said section header (322, 422) and said packet header (332) based on the extracted error correction data.

24. A method according to claim 23, wherein said additional error protection data is extracted from an optional field (119) of said packet (330) having a fixed packet header structure.

25. A method according to claim 23 or 24, wherein said optional field (119) being the adaptation field of a transport stream packet (330).

26. A method according to claim 25, wherein said additional error protection data being extracted from a private data field (565) or a stuffing bytes field (570) of said adaptation field (119).

27. A method according to any of claims 23 to 26, wherein said error correction calculation based on said additional error protection data applies a Reed Solomon decoding scheme.

28. A method according to claim 27, wherein the applied Reed Solomon decoding scheme uses a shortened and punctured Reed Solomon code.

29. A method according to claim 27 or 28, wherein said applied Reed Solomon decoding scheme being a shortened and punctured RS(255,191) decoder.

30. A method according to any of claims 23 to 29, wherein said additional error protection data contain a maximum of 16 bytes of additional error protection data.

31. A method according to any of claims 23 to 30, wherein said method being performed in a mobile receiver.

32. A method according to any of claims 23 to 31, wherein said received data are in accordance with the DVB-H specification and the DVB-Data Broadcast Specification EN 301 192.

33. A method according to any of claims 23 to 32, wherein said output data are in the form of IP packets.

34. A method according to any of claims 23 to 33, wherein each of said data sections (320, 420) having a maximum capacity of 4080 bytes.

35. A method according to any of claims 23 to 34, wherein each of said packets (330) having a maximum capacity of 184 bytes.

36. A method according to any of claims 23 to 35, wherein said data sections (320, 420) being multi protocol encapsulation data sections in accordance with the DVB-Data Broadcast Specification EN 301 192.

37. A method according to any of claims 32 to 36, wherein said received transport stream transmitting a DVB-H service and each transport stream packet (330) of a particular DVB-H service comprising a unique packet identifier (115) identifying said DVB-H service.

38. A transmitter for transmitting data in a stream of packets (330), each packet (330) comprising a header portion (332) and a payload portion (334), comprising:
an encoder for calculating error protection data for said data to be transmitted,
an encapsulator for dividing said plurality of data to be transmitted and said calculated error protection data into a plurality of sections (320, 420), each of said sections (320, 420) comprising a section header (322, 422), and
a packetizer for dividing each of said sections (320, 420) into a plurality of portions and inserting each of said portions into the payload portion (334) of one of said packets (330),
**characterized by**
a header FEC unit for calculating error protection data for said section header (322, 422) and the packet header portion (332) including said section header (322, 422) and for attaching the additionally calculated error protection data to said packet (330).

39. A transmitter according to claim 38, wherein said error protection data for said section header (322, 422) and said packet header portion (332) are inserted into an optional field (119) of said packet (330) having a fixed data structure.

40. A transmitter according to claim 38 or 39, wherein said optional field (119) being the adaptation field of the header (332) of a transport stream packet (330).

41. A transmitter according to claim 40, wherein said error protection data for said section header (322, 422) and said packet header portion (332) being inserted into a private data field (565) or a stuffing bytes field (570) of said adaptation field (119).

42. A transmitter according to any of claims 38 to 41, wherein said calculation of said error protection data for said section header (322, 422) and said packet header portion (332) applies a Reed Solomon encoding scheme.

43. A transmitter according to any of claims 38 to 42, wherein said error protection data for said section header (322, 422) and said packet header portion (332) comprises a maximum of 16 bytes.

44. A transmitter according to any of claims 38 to 43, wherein said data are transmitted to a mobile receiver.

45. A transmitter according to any of claims 38 to 44, wherein said transmission being in accordance with the DVB-H specification and the DVB-Data Broadcast Specification EN 301 192.

46. A transmitter according to any of claims 38 to 45, wherein each of said data sections (320, 420) having a maximum capacity of 4080 bytes.

47. A transmitter according to any of claims 38 to 46, wherein each of said packets (330) having a maximum capacity of 184 bytes.

48. A transmitter according to any of claims 40 to 47, wherein said transmitter broadcasting a DVB-H service and inserting a unique packet identifier (115) identifying a particular DVB-H service into each transport stream packet (330) of said particular DVB-H service.

49. A receiver for receiving data in form of a stream of packets (330), each packet (330) comprising a header portion (332) and a payload portion (334), comprising:
a section generator for extracting the data included in the payload portion (334) of each received packet (330) and forming sections (320, 420) from the extracted payload portion data (322, 324, 422, 424) of a plurality of subsequently received packets (330), each of said sections (320, 420) including a section header (322, 422), and
an error correction unit for applying an error correction calculation to a plurality of sections based on error protection data transmitted in individual sections (420) thereof
**characterized by**
an additional error correction unit for extracting additional error protection data from the packet (330) including a section header (322, 422) and for applying an error correction calculation to said section header (322,422) and the packet header (332) of said packet (330) based on the extracted error correction data.

50. A receiver according to claim 49, wherein said header error correction unit extracting said additional error protection data from an optional field (119) of said packet (330) having a fixed data structure.

51. A receiver according to claim 49 or 50, wherein said optional field (119) being the adaptation field of a transport stream packet (330).

52. A receiver according to claim 51, wherein said header error correction unit extracting said additional error protection data from a private data field (565) or a stuffing bytes field (570) of said adaptation field (119).

53. A receiver according to any of claims 49 to 52, wherein said header error correction unit applying a Reed Solomon decoding scheme.

54. A receiver according to any of claims 49 to 53, wherein said additional error protection data contain a maximum of 16 bytes of additional error protection data.

55. A receiver according to any of claims 49 to 54, wherein said receiver being a mobile receiver.

56. A receiver according to claim 55, wherein said receiver being a DVB-H receiver.

57. A receiver according to any of claims 49 to 56, wherein each of said data sections (320, 420) having a maximum capacity of 4080 bytes.

58. A receiver according to any of claims 49 to 57, wherein each of said packets (330) having a maximum data capacity of 184 bytes.

59. A receiver according to any of claims 56 to 58, wherein said receiver identifies the currently selected DVB-H service based on a unique identifier (115) included in each transport stream packet (330) of a particular DVB-H service.
